# EUROPÄISCHE PATENTSCHRIFT

(11) **EP 0 629 341 B1**
(45) Veröffentlichungstag und Bekanntmachung des Hinweises auf die Patenterteilung: **01.07.1998**
(21) Anmeldenummer: 94105765.5
(22) Anmeldetag: 14.04.1994
(51) Int. Cl.: A01F 29/00

(54) **Vorrichtung zum Auftrennen von zylindrischen Presslingen aus Halmgut oder anderen Materialien entlang ihrer Längsachse**
Device to comminute round bales, of straw or other material, along their longitudinal axis
Dispositif pour broyer des balles rondes, de paille ou d'autre matériau, le long de leur axe longitudinal

(30) Priorität: 14.06.1993 DE 4319665
(43) Veröffentlichungstag der Anmeldung: 21.12.1994
(73) Patentinhaber: Martensen, Klaus, Dipl.-Ing., D-38110 Braunschweig (DE)
(72) Erfinder: Martensen, Klaus, Dipl.-Ing., D-38110 Braunschweig (DE)
(74) Vertreter: Gramm, Werner, Prof. Dipl.-Ing.

(56) Entgegenhaltungen:
- EP-A- 0 519 858
- US-A- 2 324 159
- US-A- 2 561 069
- US-A- 5 215 266
- US-A- 5 217 174

## Beschreibung

Die Erfindung betrifft eine Vorrichtung zum Auftrennen von zylindrischen Preßlingen aus Halmgut, wie Heu oder Stroh, oder anderen Materialien entlang ihrer Längsachse, bestehend aus einem den Preßling tragenden Gestell, einem daran angeordneten Trennmesser sowie aus Elementen zur Erzeugung und Übertragung einer Relativbewegung zwischen Trennmesser und Preßling.

Bei einer vorbekannten Ausführungsform ("SCHNEID-BLITZ" der Josef Ziegler GmbH, 8897 Pöttmes) ist ein auf Laufrädern verfahrbares Gestell vorgesehen, das auf bzw. zwischen zwei voneinander beabstandeten, mit Schwenkrädern bestückten Auflageholmen einen Ballen liegend aufnimmt, der von einem horizontal ausgerichteten, klappbaren Trennmesser lotrecht durchtrennt werden kann. Das Trennmesser ist als über einen Getriebemotor und ein Kurbelgetriebe antreibbares Doppelmesser ausgebildet, das lotrecht verschiebbar an einem lotrechten Pfosten des Gestells geführt ist.

Eine andere bekannt gewordene Vorrichtung (Ballenschneider BM 1501 der Busatis-Werke, 5609 Hückeswagen) ist an der Frontladerschwinge eines Traktors anbaubar und weist ein über den Traktor antreibbares Doppelmesser auf, mit dem ein vor dem Traktor abgelegter Ballen durch Vorwärtsbewegung des Traktors durchschnitten wird.

Eine vergleichbare Vorrichtung (QUICKE SILOSPLIT der Firma ÅLÖ) benötigt ebenfalls einen Lader mit doppelt wirkenden Hubzylindern, durch deren Betätigung ein am Frontladerrahmen unterhalb eines Zinken angebrachtes einfaches, also selbst nicht angetriebenes Messer nach unten gedrückt wird, um den Ballen zu zerteilen. Der Keilwinkel der nicht angetriebenen Messerklinge wird mit von dem Zinkendurchmesser bestimmt und ist daher recht groß, was zu hohen Schnittkräften führt. Die erforderlichen doppelt wirkenden Hydraulikzylinder sind nur bei größeren und somit teureren Maschinen vorhanden.

Bekannt geworden ist noch ein Rundballengreifer (der HYDRAC-Maschinenfabrik Pühringer GmbH & Co. KG, A-4523 Neuzeug), der ein Greifen der Ballen, ein hydraulisches Wenden und ein senkrechtes Stapeln der Folienballen ermöglicht. Dieser Rundballengreifer ist mit einer Schneideinrichtung versehen, die an einem lotrechten Pfosten des Greifergestells höhenverschieblich geführt ist und ein Trennmesser aufweist, das von einem hydraulischen Zylinder durch eine Kurvenführung zwangsgesteuert ist und dabei den Ballen mit der Folie zerschneidet. Beim Zurückfahren wird das Trennmesser vollständig in dem Pfosten versenkt.

Keine dieser vorbekannten Vorrichtungen ist zum Auftrennen von beliebig langen Preßlingen geeignet. Bei allen Vorrichtungen wird das Trennmesser durch den sich in Ruhelage befindlichen Ballen hindurchgeführt. Hierfür ist eine aufwendige und somit teure Messersteuerung erforderlich. Durch die Vielzahl der bewegten Teile ergibt sich ein hoher Wartungsaufwand. Die vorbekannten Konstruktionen sind nicht zum Zertrennen von hochverdichteten Preßlingen, insbesondere nicht zum Zerteilen von aus Papier, Pappe oder Folie bestehenden Preßlingen geeignet. Keines der Geräte ist dazu bestimmt oder geeignet, in einem kontinuierlichen oder auch nur quasikontinuierlichen Verfahren Preßlinge zu zerteilen.

Der Erfindung liegt somit die Aufgabe zugrunde, eine kompakte, einfach aufgebaute Vorrichtung zu schaffen, die ohne aufwendige Messersteuerung in der Lage ist, auch hochverdichtete, beliebig lange Preßlinge aus unterschiedlichen Materialien kontinuierlich bzw. quasikontinuierlich entlang ihrer Längsachse aufzutrennen.

Ausgehend von der eingangs beschriebenen Vorrichtung wird diese Aufgabe erfindungsgemäß dadurch gelöst, daß das Gestell eine Ballenführung für einen beliebig langen Preßling trägt, der liegend von dem hydraulisch, elektrisch oder mechanisch antreibbaren, als Mitnehmerelemente ausgebildeten Elementen kontinuierlich oder quasikontinuierlich axial vorgeschoben, in Längsrichtung dem ortsfest in den Vorschubweg des Preßlings mit einer wählbaren Schnittiefe ragenden Trennmesser zugeführt und von diesem zertrennt wird.

Erfindungsgemäß ist es grundsätzlich möglich, mit einer einfachen, nicht angetriebenen Messerklinge zu arbeiten, deren wählbare Schnittiefe maximal dem Preßlingsdurchmesser entspricht. Erfindungsgemäß ist es möglich, die Vorrichtung sehr kompakt, einfach und somit preiswert zu gestalten. Es ist im Gegensatz zu den meisten bisher bekannten Vorrichtungen nur ein Antrieb für den Preßlingsvorschub erforderlich, welcher hydraulisch oder elektrisch ausgeführt werden kann. Der Vorschub kann über Schubstangen, Viergelenkgetriebe, Doppelkurbeln, Förderketten, Zackenräder, Spindeln oder ähnliche Elemente auf den Preßling übertragen werden. Sind die Mitnehmer paarweise an gegenüberliegenden Stellen des Preßlings angeordnet, so heben sich die auf den Preßling wirkenden Druckkräfte auf, und die Reibung zwischen dem Preßling und seiner Führung wird minimiert. Die Ausführung und Anordnug der angetriebenen Mitnehmerelemente ermöglicht die Verarbeitung beliebig langer Preßlinge (z.B. Compactrollen) verschiedener Durchmesser, sehr hoher Dichte und verschiedenster Materialien wie Stroh, Heu, Silage, Miscanthus Sinensis, Pappe oder Kunststoffolie.

Ein weiterer Vorteil liegt in der erstmalig bei solchen Auftrenn-Vorrichtungen verwirklichten kontinuierlichen Arbeitsweise. Hierdurch laßt sich die Vorrichtung sehr flexibel in unterschiedlichste Verfahrensketten eingliedern und automatisieren. In der Landwirtschaft läßt sich die Vorrichtung an die Betriebsgröße anpassen, indem sie bei kleineren Betrieben einzeln mit Preßlingen beschickt wird. In größeren Betrieben läßt sich die Beschickung z.B. in Form eines Vorratsbunkers automatisieren, was eine höhere Schlagkraft zur Folge hat. Die aufgetrennten Preßlinge lassen sich noch gut entweder komplett oder als einzelne Hälften zum Gebrauchsort transportieren und je nach Verwendungszweck auflösen.

Wählt man beim Trennvorgang eine Schnittiefe, welche um einen geringen Betrag von z.B. einem Zentimeter kleiner als der Durchmesser des Preßlings ist, so wird das den Preßling umhüllende Bindematerial (Garn, Netz, Folie) nur einmal durchtrennt, und läßt sich so manuell oder mechanisiert leichter entfernen. Im industriellen Bereich ist der Einsatz zum Auftrennen von Preßlingen aus nachwachsenden Rohstoffen denkbar. In Kraftwerken kann dieser Schritt als Voraussetzung für die Verbrennung erforderlich sein. Hier bringen die hohe Durchsatzleistung und die Automatisierbarkeit Vorteile. Wird das Vorrichtungsgestell speziell, z.B. als Rohr, ausgebildet, kann es gleichzeitig als Feuerschleuse bei der Beschickung des Ofens dienen.

Ein weiterer industrieller Anwendungsfall ist das kontinuierliche, automatisierte Aufschneiden von Preßlingen aus Papier, Kartonagen oder Folien, die zum Zwecke des wirtschaftlichen Transports hergestellt und später zur Weiterverarbeitung (Recycling-Prozeß) der Materialien wieder aufgelöst werden müssen.

Ausführungsbeispiele der Erfindung werden im folgenden anhand der **Fig**. 1 bis 8 beschrieben. Es zeigt
**Fig**. 1 eine Seitenansicht einer Auftrenn-Vorrichtung mit Schubstangenförderelement
**Fig**. 2 eine Draufsicht einer Auftrenn-Vorrichtung mit einem im Eingriff befindlichen Schubstangenförderelement (unten) und einem im Rückhub befindlichen Schubstangenförderelement (oben)
**Fig**. 3 eine Vorderansicht einer Auftrenn-Vorrichtung mit Schubstangenförderelement
**Fig**. 4 eine Draufsicht eines Viergelenkförderelementes
**Fig**. 5 eine Draufsicht eines Doppelkurbelförderelementes
**Fig**. 6 Eine Vorderansicht zweier Doppelkurbelförderelemente
**Fig**. 7 eine Draufsicht eines Zackenradförderelementes
**Fig**. 8 eine Draufsicht eines Kettenförderelementes
Die in den **Fig**. 1,2 und 3 dargestellte Vorrichtung besteht aus einem Gestell 1, welches eine Ballenführung 2 und ein nicht angetriebenes Messer 3 trägt. Das Messer 3 hat eine dreieckförmige Gestalt, dessen eine Kathete oben am Gestell 1 befestigt ist, und dessen Hypotenuse die Schneide darstellt. Ein doppeltwirkender Hydraulikzylinder 4 stützt sich einerseits am Gestell 1 ab, und ist andererseits über eine Quertraverse 5 und zwei Stützen 6 mit zwei Führungsstangen 7 gekoppelt. Die Führungsstangen 7 sind mittels geeigneter Linearführungen 11 im Gestell 1 gelagert. Die gezahnten Mitnehmerelemente 8 (z.B. U-Profile) sind mittels winkelbeweglicher Koppeln 9 mit den Führungsstangen 7 verbunden. Die Mitnehmerelemente 8 sind gegenüber den Führungsstangen 7 in geeigneter Form durch Federn 10 vorgespannt. Der Schwenkweg der Koppeln 9 und somit der maximale Abstand zwischen Mitnehmerelementen 8 und Führungsstangen 7 ist durch geeignete Anschläge 12 gegenüber den Führungsstangen 7 begrenzt.

Die Arbeitsweise dieser Vorrichtung ist wie folgt: Der Hydraulikzylinder 4 versetzt, durch eine geeignete Steuerung hervorgerufen, die Quertraverse 5, die Stützen 6 und die Führungsstangen 7 gegenüber dem Gestell 1 in eine gleichmäßige translatorische, oszillierende Bewegung bei der die Führungsstangen 7 sich in den Linearführungen 11 bewegen (in **Fig**.1 und 2 durch Pfeile angedeutet). Die Preßlingsführung 2 ist in einer geeigneten Weise nach links verlängert (in **Fig**. 1 nicht dargestellt), daß mindestens ein Preßling 13 automatisch oder manuell der Vorrichtung zugeführt werden kann. Der Preßling 13 wird, sobald er von den ersten Zähnen der Mitnehmerelemente 8 erfaßt ist, auf das Messer 3 zu, nach rechts gefördert. Dies geschieht folgendermaßen: Durch die Vorspannung mittels der Federn 10 werden die Mitnehmerelemente 8 immer in Kontakt mit der Preßlingsmantelfläche gehalten. Beim Arbeitshub (in **Fig**.2 unten dargestellt) bewirkt die auftretende Kraft zwischen Preßling 13 und Mitnehmerelement 8 ein Schwenken der Koppeln 9 zum Preßling 13 hin, wodurch die Zähne der Mitnehmerelemente 8 in die Preßlingsoberfläche eindringen. Dies geschieht gleichzeitig auf beiden Seiten des Preßlings 13, sodaß dieser automatisch zentriert wird. Bei geeigneter Wahl von Länge und Winkelstellung der Koppeln 9 ergibt sich ein Kräftegleichgewicht. Die senkrecht auf den Preßling 13 wirkenden Kraftkomponenten der Mitnehmerelemente 8 sorgen für den nötigen Kraft- bzw. Formschluß zwischen Preßling 13 und Mitnehmerelementen 8; die in Längsrichtung des Preßlings 13 wirkenden Kraftkomponenten entsprechen den Reib- und Schnittkräften. Die Anschläge 12 verhindern zu große Winkelausschläge der Koppeln 9 und begrenzen so die Normalkräfte auf den Preßling 13, welche z.B. beim Durchschlagen der Koppeln durch ihren Totpunkt wegen des Kniehebeleffektes sehr groß werden könnten. Der Förder- und Schneidvorgang dauert so lange, bis der Hub des Hydraulikzylinders 4 erschöpft ist. Beim darauffolgenden Rückhub (in **Fig**.2 oben dargestellt) ziehen sich die Sahne der Mitnehmerelemente durch die Winkelstellung der Koppeln 9 automatisch aus dem Preßling 13 und gleiten auf seiner Oberfläche zurück. Der Preßling 13 bleibt dabei entweder durch die Reibung an Ballenführung 2 und Messer 3 oder durch geeignete einfache Rückhaltevorrichtungen relativ zum Gestell 1 stehen. Der Arbeitshub beginnt erneut. Die Frequenz und somit der Durchsatz ist in gewissen Grenzen an der Steuerung einzustellen. Der Preßling 13 wird auf diese Weise quasikontinuierlich durch die Vorrichtung geschoben und vom Messer 3 aufgetrennt. Beläßt man zwischen Messerspitze und unterer Ballenführung (Einzelheit 14, **Fig**.1) einen geringen Abstand von z.B. 5-10 mm, so wird das Bindemittel des Preßlings 13 nur einmal durchtrennt, und die Entfernung vom aufgetrennten Preßling vereinfacht. Diese kann auch kontinuierlich z.B. durch ein am Ende der unteren Ballenführung 2 angebrachten nicht näher dargestellten Haken o.ä. während des Trennvorganges erfolgen. Hinter der Vorrichtung kann entweder eine weitere Ballenführung oder auch ein einfacher Transportwagen angeordnet sein, um das weitere Handling des Preßlings 13 zu ermöglichen (in **Fig**. 1 nicht dargestellt).

Weitere Möglichkeiten den Preßling zu fördern zeigen **Fig**.4 bis 8. In **Fig**.4 ist ein Viergelenkförderer dargestellt. Das Mitnehmerelement 15 (stellt die Koppel dar), ist auf einer Seite in der Schnwinge 16 gelagert und wird von der Kurbel 17 angetrieben. **Fig**.5 und 6 zeigen den Antrieb der Mitnehmerelemente 18 mittels Doppelkurbeln. Hierbei sind je zwei Mitnehmerelemente 18 je Seite auf zwei Kurbelwellen 19 mit 90 Grad Versatz montiert, um ein Durchschlagen des Getriebes in den Totpunktlagen zu verhindern. Eine Kurbelwelle jeder Seite wird synchron von z.B. einem Getriebemotor 20 angetrieben. **Fig**.7 und 8 zeigen zwei Möglichkeiten den Preßling 13 kontinuierlich anzutreiben. Dies geschieht entweder mittels eines gezahnten Zackenrades 21 oder mittels einer umlaufenden Gliederkette 22 welche mit geeigneten Mitnehmern versehen ist.

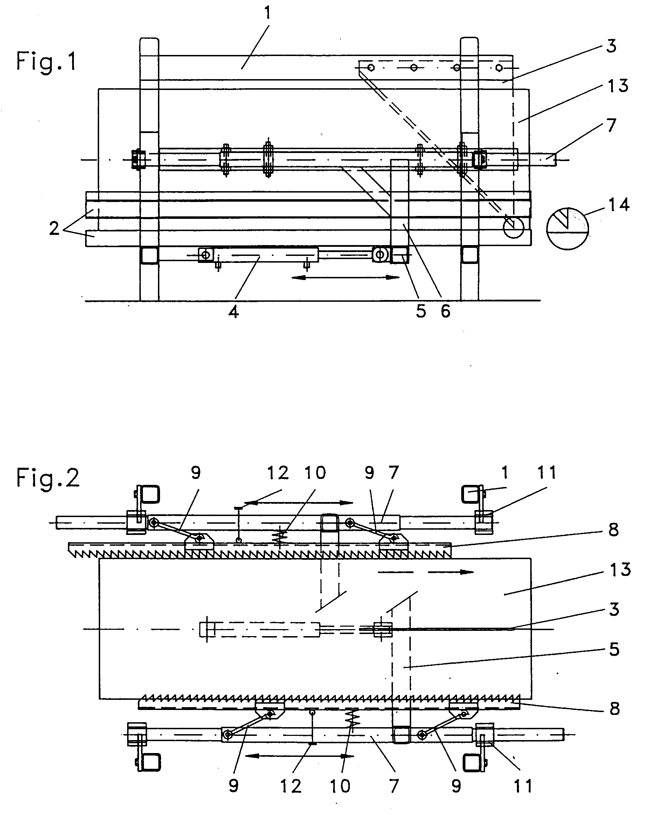

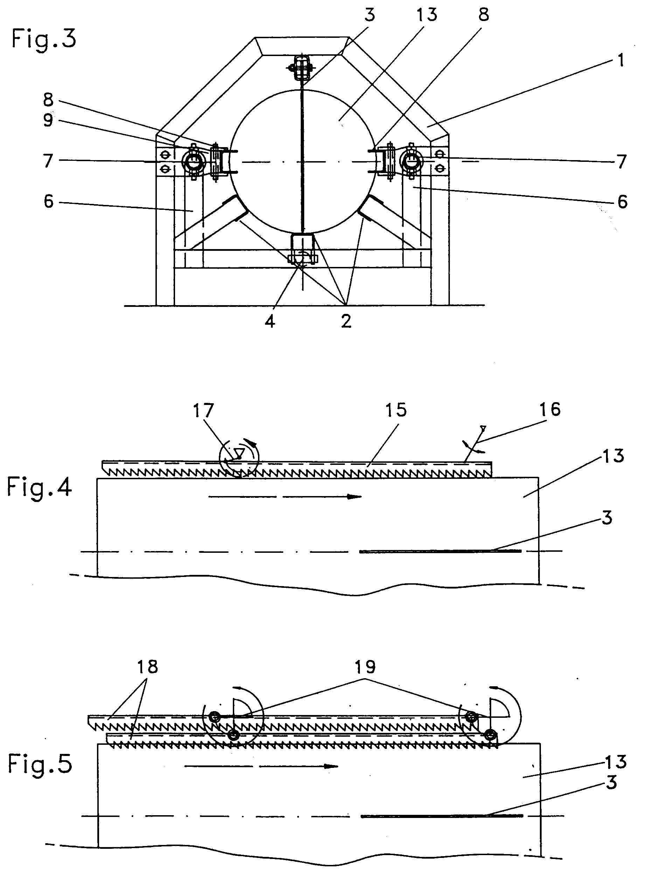

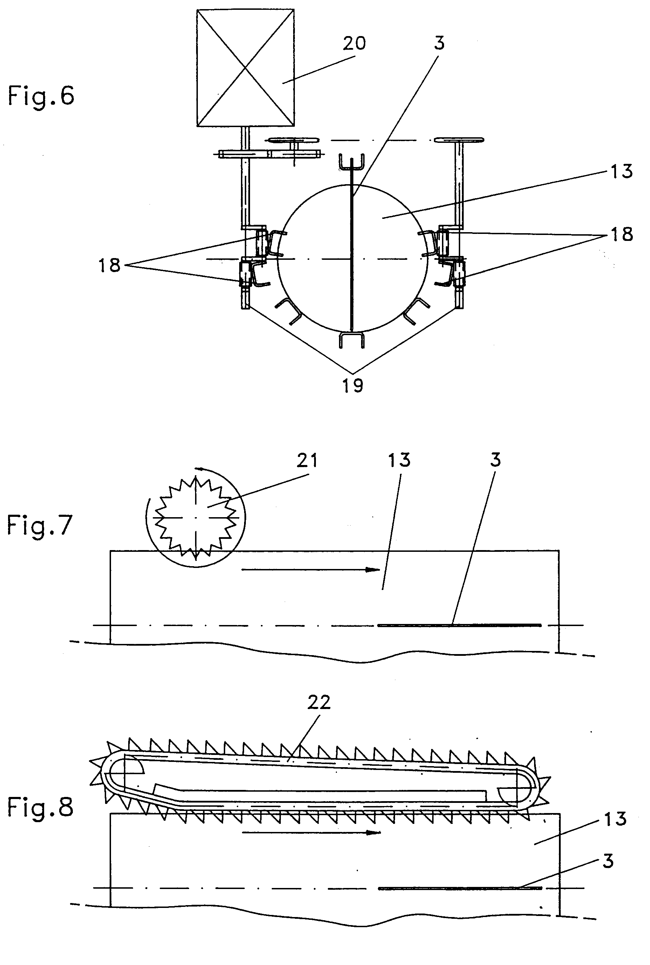

## Patentansprüche

1. Vorrichtung zum Auftrennen von zylindrischen Preßlingen (13) aus Halmgut, wie Heu oder Stroh, oder anderen Materialien entlang ihrer Längsachse, bestehend aus einem den Preßling (13) tragenden Gestell (1), einem daran angeordneten Trennmesser (3) sowie aus Elementen (4-10; 15, 16, 17; 18, 19, 20; 21; 22) zur Erzeugung und Übertragung einer Relativbewegung zwischen Trennmesser (3) und Preßling (13), **dadurch gekennzeichnet,** daß das Gestell (1) eine Ballenführung (2) für einen beliebig langen Preßling (13) trägt, der liegend von dem hydraulisch, elektrisch oder mechanisch antreibbaren, als Mitnehmerelemente (8; 15; 18; 21; 22) ausgebildeten Elementen kontinuierlich oder quasikontinuierlich axial vorgeschoben, in Längsrichtung dem ortsfest in den Vorschubweg des Preßlings (13) mit einer wählbaren Schnittiefe ragenden Trennmesser (3) zugeführt und von diesem zertrennt wird.

2. Vorrichtung nach Anspruch 1, **dadurch gekennzeichnet,** daß die Mitnehmerelemente (8) durch eine oder mehrere gezahnte Schubstangen gebildet sind, die über winkelbewegliche Koppeln (9) mit Führungsstangen (7) verbunden sind, die über einen oder mehrere Hydraulikzylinder (4) und eine geeignete Steuerung in oszillierende Bewegung versetzbar sind.

3. Vorrichtung nach Anspruch 1, **dadurch gekennzeichnet,** daß die Mitnehmerelemente (15) durch ein oder mehrere gezahnte Koppelglieder eines Viergelenkgetriebes gebildet sind, dessen Kurbel (17) hydraulisch, mechanisch oder elektrisch antreibbar ist.

4. Vorrichtung nach Anspruch 1, **dadurch gekennzeichnet,** daß die Mitnehmerelemente (18) ein oder mehrere Satz paarweise mit 90 Grad Versatz auf zwei Kurbelwellen (19) gelagerte gezahnte Koppelglieder sind, von denen je eine Kurbelwelle (19) hydraulisch, mechanisch oder elektrisch antreibbar ist.

5. Vorrichtung nach Anspruch 1, **dadurch gekennzeichnet,** daß die Mitnehmerelemente ein oder mehrere hydraulische, mechanische oder elektrische antreibbare gezahnte Scheiben (21) sind.

6. Vorrichtung nach Anspruch 1, **dadurch gekennzeichnet,** daß die Mitnehmerelemente ein oder mehrere umlaufende, hydraulisch, mechanisch oder elektrisch antreibbare Ketten (22) mit Mitnehmerzinken sind.

7. Vorrichtung nach einem der vorhergehenden Ansprüche, **dadurch gekennzeichnet,** daß die Mitnehmerelemente (8; 15; 18; 21; 22) an der Seite der Preßlingszufuhr in Länge und Gestalt so ausgebildet sind, daß sie, um einen automatischen Betrieb zu gewährleisten, den nachfolgenden Preßling (13) von oben, unten, einer Seite oder auch axial erfassen und weiterfördern.

8. Vorrichtung nach einem der vorhergehenden Ansprüche, **dadurch gekennzeichnet,** daß die Mitnehmerelemente (8; 15; 18) sich gegenüberliegend beidseitig vom Trennmesser (3) angeordnet und so ausgebildet sind, daß sich die von ihnen auf den Preßling (13) ausgeübten Druckkräfte gegenseitig aufheben.

9. Vorrichtung nach einem der vorhergehenden Ansprüche, **dadurch gekennzeichnet,** daß das Trennmesser (3) zur Restentleerung der Vorrichtung leicht demontierbar oder aus dem Vorschubweg des Preßlings (13) herausklappbar ist.

10. Vorrichtung nach einem der vorhergehenden Ansprüche, **dadurch gekennzeichnet,** daß für den Vorschub des Preßlings (13) ein einziges Mitnehmerelement (8; 15; 18; 21; 22) vorgesehen ist.

## Claims

1. Device for ripping open cylindrical pressings (13) made of stalk material, such as hay or straw, or other materials along their longitudinal axis, the said device consisting of a stand (1) carrying the pressing (13), a ripping knife (3) disposed on the said stand, and also elements (4-10; 15, 16, 17; 18, 19, 20; 21; 22) for generating and transmitting a relative movement between the ripping knife (3) and the pressing (13), **characterised in that** the stand (1) carries a bale guide (2) for a pressing (13) of any desired length, which pressing is axially advanced continuously or quasi-continuously in the lying-down condition by the elements which can be driven hydraulically, electrically or mechanically and are constructed as entrainment elements (8; 15; 18; 21; 22), is fed in the longitudinal direction to the ripping knife (3) which projects with a selectable cutting depth in a stationary manner in the path of advance of the pressing (13), and is ripped up by the latter.

2. Device according to claim 1, **characterised in that** the entrainment elements (8) are formed by one or more toothed thrust rods which are connected, via angularly moving links (9), to guide rods (7) which can be set in oscillating motion via one or more hydraulic cylinders (4) and a suitable control system.

3. Device according to claim 1, **characterised in that** the entrainment elements (15) are formed by one or more toothed coupling members of a four-joint transmission, the crank (17) of which can be driven hydraulically, mechanically or electrically.

4. Device according to claim 1, **characterised in that** the entrainment elements (18) are one or more sets of toothed coupling members which are mounted, in pairs with a 90 degree offset, on two crankshafts (19) of which one crankshaft (19) in each case can be driven hydraulically, mechanically or electrically.

5. Device according to claim 1, **characterised in that** the entrainment elements are one or more toothed discs (21) which can be hydraulically, mechanically or electrically driven.

6. Device according to claim 1, **characterised in that** the entrainment elements are one or more circulating chains (22) with entrainment prongs, which chains can be hydraulically, mechanically or electrically driven.

7. Device according to one of the preceding claims, **characterised in that,** on the pressings feed side, the entrainment elements (8; 15; 18; 21; 22) are so constructed, in length and shape, that they grip the succeeding pressing (13) from above, from below, from one side or even axially and convey it onwards, in order to ensure automatic operation.

8. Device according to one of the preceding claims, **characterised in that** the entrainment elements (8; 15; 18) are disposed opposite one another on both sides of the ripping knife (3) and are so constructed that the pressing forces exerted by the said elements on the pressing (13) neutralize each other.

9. Device according to one of the preceding claims, **characterised in that,** for the purpose of emptying the device of residues, the ripping knife (3) can be easily demounted or folded out of the path of advance of the pressing (13).

10. Device according to one of the preceding claims, **characterised in that** a single entrainment element (8; 15; 18; 21; 22) is provided for advancing the pressing (13).

## Revendications

1. Dispositif pour éventrer des balles rondes (13) de produit en tige, tel que du foin ou de la paille ou autres matériaux, le long de leur axe longitudinal, constitué d'un châssis (1) portant la balle (13), d'un couteau (3) agencé sur celui-ci, ainsi que d'éléments (4-10; 15, 16, 17; 18, 19, 20; 21; 22) pour produire et transmettre un mouvement relatif entre le couteau (3) et la balle (13), caractérisé en ce que le châssis (1) porte un guidage de balle (2) pour une balle (13) de n'importe quelle longueur, les éléments, réalisés sous la forme d'éléments d'entraînement (8; 15; 18; 21; 22) pouvant être actionnés mécaniquement, électriquement ou hydrauliquement, faisant avancer la balle axialement de manière continue ou quasi-continue en position couchée, la balle étant acheminée en direction longitudinale au couteau (3) monté fixement dans le trajet d'avance de la balle (13) dans lequel il fait saillie avec une profondeur de coupe que l'on peut sélectionner, et se faisant éventrer par celui-ci.

2. Dispositif selon la revendication 1, caractérisé en ce que les éléments d'entraînement (8) sont constitués par une ou plusieurs barres de poussée dentées, qui, par l'intermédiaire de couplages (9) mobiles angulairement, sont reliées à des barres de guidage (7) qui peuvent être mises en mouvement oscillant par l'intermédiaire d'un ou plusieurs vérins hydrauliques (4) et d'une commande appropriée.

3. Dispositif selon la revendication 1, caractérisé en ce que les éléments d'entraînement (15) sont réalisés sous la forme d'un ou plusieurs organes de couplage dentés d'un mécanisme à quadrilatère articulé, dont la manivelle (17) peut être entraînée hydrauliquement, mécaniquement ou électriquement.

4. Dispositif selon la revendication 1, caractérisé en ce que les éléments d'entraînement (18) sont un ou plusieurs jeux d'organes de couplage dentés supportés en rotation en formant des paires présentant un décalage de 90° sur deux arbres-manivelle (19), dont l'un respectif peut être entraîné hydrauliquement, mécaniquement ou électriquement.

5. Dispositif selon la revendication 1, caractérisé en ce que les éléments d'entraînement sont un ou plusieurs disques dentés (21) pouvant être entraînés hydrauliquement, mécaniquement ou électriquement.

6. Dispositif selon la revendication 1, caractérisé en ce que les éléments d'entraînement sont une ou plusieurs chaîne(s) (22) circulante(s) à griffes d'entraînement, pouvant être entraînée(s) hydrauliquement, mécaniquement ou électriquement.

7. Dispositif selon l'une quelconque des revendications précédentes, caractérisé en ce que du côté de l'amenée de la balle les éléments d'entraînement (8; 15; 18; 21; 22) sont agencés en longueur et configuration telles que pour assurer un fonctionnement automatique, ils saisissent la balle suivante (13) d'en haut, d'en bas, d'un côté ou également axialement, et font continuer son avance.

8. Dispositif selon l'une quelconque des revendications précédentes, caractérisé en ce que les éléments d'entraînement (8; 15; 18) sont agencés face à face de part et d'autre du couteau (3), et sont configurés de façon que les forces pressantes qu'ils exercent sur la balle (13) s'annulent mutuellement.

9. Dispositif selon l'une quelconque des revendications précédentes, caractérisé en ce que pour le vidage résiduel du dispositif le couteau (3) est facilement démontable ou rabatable en dehors du trajet d'avance de la balle (13).

10. Dispositif selon l'une quelconque des revendications précédentes, caractérisé en ce qu'il est prévu un seul élément d'entraînement (8; 15; 18; 21; 22) pour l'avance de la balle (13).
